# EUROPÄISCHE PATENTSCHRIFT

(11) **EP 1 067 070 B1**
(45) Veröffentlichungstag und Bekanntmachung des Hinweises auf die Patenterteilung: **28.05.2003**
(21) Anmeldenummer: 00810509.0
(22) Anmeldetag: 14.06.2000
(51) Int. Cl.: B65G 69/28, B60P 1/43

(54) **Auffahrschiene**
Loading Ramp
Rampe de chargement

(30) Priorität: 30.06.1999 DE 29911271 U
(43) Veröffentlichungstag der Anmeldung: 10.01.2001
(73) Patentinhaber: Alcan Technology & Management AG, 8212 Neuhausen am Rheinfall (CH)
(72) Erfinder: Bank, Werner, 78315 Radolfzell (DE); Kemen, Hans-Jörgen, 78224 Singen (DE)

(56) Entgegenhaltungen:
- EP-A- 0 778 232
- DE-A- 3 701 618
- DE-A- 19 651 400
- US-A- 4 042 992

## Beschreibung

Die Erfindung betrifft eine Auffahrschiene gemäss dem Oberbegriff des Anspruchs 1.

Derartige Verladebrücken sind dielenartige Metallkonstruktionen, welche üblicherweise aus zwei Seitenprofilen und sich zwischen diesen erstreckendem Fahrprofil bestehen sowie mit sprossenartigen Ausformungen oder Auflagen ausgerüstet sind; zwei dieser Auffahrschienen werden in Abstand nebeneinander in Schräglage angeordnet und auf der Pritsche, Rampe od.dgl. aufgelegt oder an diese angehängt.

Werden solche Auffahr- oder Verladeschienen aus Stahlteilen zusammengefügt, sind sie schwer und nur unzureichend zu handhaben. Auch ist es bekannt, zumindest Teile solcher Verladeschienen bei der als Schweißkonstruktion ausgebildeten Verladebrücken vorzusehen.

Aus der DE 34 33 754 A1 ist eine fahrbare Langrampe zum Beund Entladen von Fahrzeugen bekannt, die eine Stützkonstruktion mit Seitenprofilträgern sowie mehreren Querträgern aus einer Aluminiumlegierung aufweist. Diese Stützkonstruktion ist durch eine Fahrfläche aus Stahlgittern abgedeckt. Die Seitenwände der Langrampe werden durch die Seitenprofilträger gebildet, welche auf ihrer dem jeweils anderen Seitenprofilträger zugewandten Innenseite zwei Nuten T-förmigen Querschnitts anbieten. In diese greifen an den Enden der Querträger vorgesehene Nutsteine ein, die mit Klemmschrauben am querschnittlichen Querschenkel des I-Querträgers festliegen.

Die DE-OS 22 31 694 zeigt eine Rampen- oder Brückenkonstruktion mit auf Querträgern angeordneten Rasterplatten und beschreibt die Art der Befestigung solcher Rasterplatten, die den wesentlichen Teil der Oberfläche einer Rampe, Brücke od.dgl. bilden.

Schließlich erfasst die US 36 91 576 eine Rampen- oder Brückenkonstruktion mit einer Mehrzahl von Querträgern, die an Seitenelementen befestigt sind. Letztere weisen ein in Längsrichtung verlaufendes oberes Halteteil auf, das Druckkräfte aufnehmen kann, sowie eine -- ebenfalls in Längsrichtung vorgesehene -- Laufschiene, die Zugkräfte übernimmt.

Die Veröffentlichungsschrift DE 37 01 618 A1 offenbart eine Auffahrschiene, welche wenigstens zwei in ihrer Längsrichtung verlaufende Strangpressprofile enthält, welche durch Querelemente fest verbunden sind und zwischen denen wenigstens ein weiteres Profil die befahrbare bahnartige Oberfläche anbietet.

Die Patentschrift US 4,042,992 offenbart eine Auffahrrampe aus zwei Auffahrschienen, wobei die Auffahrschienen je nach Anforderungen mittels Bolzenverschlüsse zu einer Verladefläche zusammengefügt oder einzeln in Distanz zueinander angeordnet werden können. Die Auffahrschienen bestehen aus Platten, die bodenseitig mit Verstärkungsrippen versehen sind. Angesichts dieses Standes der Technik hat sich der Erfinder das Ziel gesetzt, die Handhabung solcher Auffahrschienen weitergehend zu erleichtern und ihren Einsatzbereich zu erweitern.

Zur Lösung dieser Aufgabe führt die Lehre des unabhängigen Anspruches; die Unteransprüche geben günstige Weiterbildungen an.

Erfindungsgemäß sind die Hohlprofile der Auffahrschiene zu zwei Schienenhälften aus jeweils zumindest zwei Hohlprofilen zusammengefügt und beide Schienenhälften durch wenigstens eine Kupplungseinrichtung lösbar miteinander verbunden. Die Auffahroder Verladeschiene ist also in ihrer Längsrichtung zweigeteilt, um dem Benutzer ein geringeres Stückgewicht anbieten zu können. Die beiden Schienenhälften -- in besonderen Fällen auch mehrerer schnellverbindbare Schienenlängsteile -können durch die Kupplungseinrichtung/en problemlos in situ zur Auffahrschiene verbunden -- und wieder entkoppelt -werden.

Nach einem weiteren Merkmal der Erfindung weist die Kupplungseinrichtung jeweils einen Haltebolzen für zumindest ein Hohlprofil einer der Schienenhälften auf, wobei die Haltebolzen in den Innenraum des Hohlprofils eingreifen sowie durch ein jochartiges Querelement -- insbesondere eine Sockelplatte - - verbunden sind, das/die außerhalb der Hohlprofile verläuft, bevorzugt deren Profilboden anliegt. Zudem hat es sich als günstig erwiesen, zwei Haltebolzen vorzusehen, die etwa in den Mittellinien einander benachbarter Hohlprofile der beiden Schienenhälften verlaufen und vorteilhafterweise deren Profilboden durchsetzen.

Um eine günstige Spannstellung zu gewährleisten, soll der Haltebolzen mit seiner Bolzenstirn der firstwärtigen Profildecke des Hohlprofils stützend anliegen. Die Länge jener Sockelplatte ist im übrigen so gewählt, dass zwischen den beiden Schienenhälften von Hohlprofilen ein Spaltabstand besteht, der bevorzugt etwa 10 % der Breite zweier Hohlprofile der Schienenhälfte misst.

Eine weitere koppelbare Verbindung kann dann erreicht werden, wenn die übliche endwärtige Auflagezunge der Auffahrschiene beide Schienenhälften einstückig übergreift und an den benachbarten Profilstirnseiten zusammenhält.

Sind die Hohlprofile der Auffahrschiene in bekannter Weise kastenähnlichen Querschnittes, kann in die Seitenwände des Hohlprofils jeweils zumindest eine flache Längsnut stabilitätserhöhend eingeformt sein; die Längsnuten benachbarter Hohlprofile begrenzen dann einen Hohlraum rechteckigen Querschnitts.

Nach einem weiteren Merkmal der Erfindung soll die Profildecke an ihren mit den Seitenwänden des Hohlprofils gebildeten Kanten jeweils eine Einformung aufweisen, wobei in die äußeren Einformungen der außenliegenden Hohlprofile jeder Schienenhälfte ein Seitenbegrenzungsstreifen eingesetzt zu werden vermag.

Schließlich können die erfindungsgemäßen Auffahrschienen bei Bedarf mit einer griffigen Oberfläche versehen werden, beispielsweise mit sog. Kletterleisten, deren Abstand voneinander den Bedürfnissen angepasst werden kann.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in
- Fig. 1, 2:: Draufsicht sowie Seitenansicht in Gebrauchsstellung einer erfindungsgemäßen Auffahrschiene;
- Fig. 3:: eine gegenüber Fig. 2 vergrößerte und teilweise nach Linie III-III der Fig. 4 geschnittene Seitenansicht der Auffahrschiene;
- Fig. 4:: den vergrößerten Querschnitt durch Fig. 3 nach deren Linie IV-V;
- Fig. 5:: den gegenüber Fig. 4 vergrößerten Querschnitt durch eine Schienenhälfte, geschnitten gemäß Linie IV - V der Fig. 3.

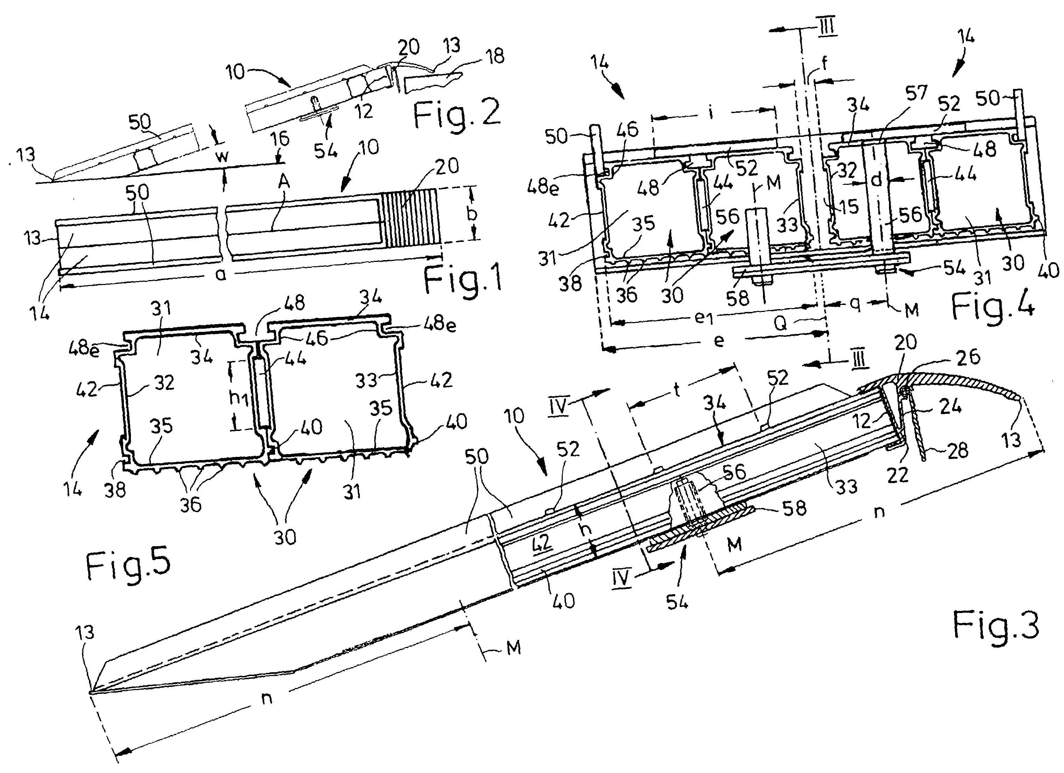

Eine Auffahrschiene 10 einer Länge a von hier beispielsweise 4000 mm und einer Breite b von 440 mm ist zur Handhabungserleichterung aus zwei Schienenhälften 14 zusammengesetzt und verläuft gemäß Fig. 2 -- in einem Winkel w geneigt -- zwischen einem Fahrboden 16 und der Oberfläche einer bei 18 angedeuteten Rampe oder einer Pritsche eines nicht dargestellten Fahrzeuges, auf der sie mit einer querschnittlich leicht gekrümmten Auflagezunge 20 ruht. An letzere ist eine C-artige Profilseite 22 angeformt, um damit auf die eine Stirnseite 12 der Auffahrschiene 10 der Höhe h von etwa 100 mm aufgesteckt werden zu können.

Die Profilseite 22 der Auflagezunge 20 ist mit einer geneigten Verstärkungswand 24 versehen; sowohl von dieser als auch von der Rückseite 21 der Auflagezunge 20 ragt eine querschnittlich gekrümmte Leiste ab; beide Leisten begrenzen eine Kedernut 26 zur Aufnahme des Keders einer Schürze 28 od.dgl. Ausrüstungselementes.

Der Körper der Auffahrschiene 10 setzt sich aus -- hier vier -- aus einer Aluminiumlegierung stranggepreßten Hohlprofilen 30 zusammen, jede der Schienenhälfte 14 -- einer Querschnittsbreite e von 220 mm -- also aus einem Paar dieser Hohlprofile 30, wie Fig. 4 deutlich werden läßt. Die Breite e₁ beider Hohlprofile 30 ist mit 200 mm kürzer als jene Querschnittsbreite e der Schienenhälfte 14; zwischen den beiden Schienenhälften 14 verläuft ein Spaltraum 15 der Breite f von 20 mm. Die Hohlprofile 10 jeder dieser Schienenhälften 14 werden durch quer verlaufende Gewindestäbe -als beispielsweise in Abstand von 1000 mm angeordnete Zuganker -- aneinander gepresst.

Der Innenraum 31 des Hohlprofils 30 ist gemäß Fig. 4 ,5 von i. w. quadratischem Querschnitt sowie von zwei Profilwänden 32, 33, einer Profildecke 34 und einem Profilboden 35 begrenzt. An den Profilboden 35 sind außenseitig Längsrippen 36 angeformt, welche also parallel zur Längsachse A der Auffahrschiene 10 verlaufen. Außerdem ist nahe dem Profilboden 35 in der in Fig. 5 linken Profilwand 32 eine Längsnut 38 zu erkennen, in deren Ebene in der anderen Profilwand 33 eine Nasenleiste 40 entsprechenden Querschnittes mit angefasten Kanten verläuft - die Nasenleiste 40 greift bei zusammengebauter Auffahrschiene 10 in die Längsnut 38 des benachbarten Hohlprofiles 30 ein. In jede der Profilwände 32, 33 ist an ihrer Außenfläche eine sich fast über die gesamte Wandhöhe erstreckende flache Profilnut 42 eingeformt, die mit der entsprechenden Profilnut 42 der anliegenden anderen Profilwand 33, 32 einen Hohlraum 44 gestreckten rechteckigen Querschnitts der Höhe h₁ bildet.

Die Profildecke 34 ist an beide Profilwände 32, 33 durch jeweils eine L-förmige Anformung 46 angeschlossen und kragt über diese so hinaus, dass in der Auffahrschiene 10 hinterschnittene Firstnuten 48 T-förmigen Querschnittes entstehen zur Aufnahme von nicht wiedergegebenen Einsatzleisten entsprechenden T-förmigen Querschnittes. Die Einsatzleisten sind entweder lange Profile mit Einschnitten oder kurze Profile, die von Distanzplatten in Abstand gehalten werden. In die nach außen offenen Randnuten 48ₑ der äußeren Hohlprofile 30 der Auffahrschiene 10 können Seitenbegrenzungsstreifen 50 eingesetzt werden. Zwischen diesen verlaufen auf den Profildecken 34 jeder Schienenhälfte 14 Kletterleisten oder Querprofile 52 der Länge i von 120 mm (Fig. 4) geringen Querschnittes als Rutschhemmer, deren Abstand t voneinander eingestellt zu werden vermag.

Die Schienenhälften 14 werden mittels zumindest einer Kupplungseinrichtung 54 zusammengehalten, die in Fig. 3 beispielsweise in einem Mittelabstand n von etwa 600 mm zur jeweiligen Stirnkante 13 der Auffahrschiene 10 vorgesehen wird. Die Kupplungseinrichtung 54 besteht aus einem Haltebolzen 56 für jede Schienenhälfte 14 und einer von diesen Haltebolzen 56 durchgriffenen und sie verbindenden Sockelplatte 58, die den Profilböden 35 gegenübersteht. Der Haltebolzen 56 eines beispielsweisen Durchmessers d von 20 mm verläuft in der Mittellinie M des jeweils innenliegenden Hohlprofils 30, also etwa in einem Abstand q von 60 mm zur Querschnitts-Mittellinie Q der Auffahrschiene 10; die Kupplungseinrichtung 54 hält die beiden Schienenhälften 14 in dem erwähnten Abstand f von 20 mm. In der in Fig. 4 verdeutlichten Kupplungsstellung liegt die Stirn 57 des dortigen Haltebolzens 56 der Profildecke 34 seines Hohlprofils 30 innenseitig stützend an.

## Patentansprüche

1. Auffahrschiene als Verladebrücke zwischen einem Fahrgrund (16) sowie einer dazu in Abstand angeordneten Ladepritsche, Rampe od. dgl. Fläche (18) mit gegebenenfalls von Fahrzeugreifen befahrbarer bahnartiger Oberfläche, wobei sich der Körper der Auffahrschiene aus mehreren in ihrer Längsrichtung verlaufenden, auf dem Wege des Strangpressens hergestellten Hohlprofilen (30), zusammensetzt,
**dadurch gekennzeichnet, dass**
der Körper der Auffahrschiene (10) in Längsrichtung zweigeteilt ist und aus zwei Schienenhälften (14) aus jeweils zumindest zwei Hohlprofilen zusammengefügt ist und beide Schienenhälften durch wenigstens eine Kupplungseinrichtung (54) lösbar miteinander verbunden sind, wobei die Kupplungseinrichtung (54) jeweils einen Haltebolzen (56) für zumindest ein Hohlprofil (30) einer der Schienenhälften (14) aufweist, die Haltebolzen in den Innenraum (31) des Hohlprofils eingreifen sowie durch ein jochartiges Querelement verbunden sind, das ausserhalb der Hohlprofile verläuft.

2. Auffahrschiene nach Anspruch 1, **dadurch gekennzeichnet, dass** das jochartige Querelement eine Sockelplatte (58) ist.

3. Auffahrschiene nach Anspruch 1 oder 2, **gekennzeichnet durch** zwei Haltebolzen (56), die etwa in den Mittellinien (M) einander benachbarter Hohlprofile (30) der beiden Schienenhälften (14) verlaufen.

4. Auffahrschiene nach Anspruch 2 oder 3, **dadurch gekennzeichnet, dass** die Haltebolzen (56) den Profilboden (35) ihres Hohlprofils (30) durchsetzen, dem die Sockelplatte (58) der Kupplungseinrichtung (54) etwa anliegt.

5. Auffahrschiene nach einem der Ansprüche 1 bis 4, **dadurch gekennzeichnet, dass** der Haltebolzen (56) mit seiner Bolzenstirn (57) der firstwärtigen Profildecke (34) des Hohlprofils (30) stützend anliegt.

6. Auffahrschiene nach einem der Ansprüche 1 bis 5, **dadurch gekennzeichnet, dass** zwischen den beiden Schienenhälften (14) von Hohlprofilen (30) ein Spaltabstand (f) besteht, der bevorzugt etwa 10 % der Breite (e₁) zweier Hohlprofile der Schienenhälfte beträgt.

7. Auffahrschiene nach einem der Ansprüche 1 bis 6, **dadurch gekennzeichnet, dass** die Auffahrschiene eine endwärtige Auflagezunge (20) enthält und die Auflagezunge (20) die fluchtenden Stirnseiten (12) beider Schienenhälften (14) quer zur Längsachse (A) der Auffahrschiene (10) übergreift.

8. Auffahrschiene nach einem. der Ansprüche 1 bis 7, **dadurch gekennzeichnet, dass** die Hohlprofile (30) der Auffahrschiene von kastenähnlichem Querschnitt sind und in die Seitenwände (32, 33) des Hohlprofils(30) jeweils zumindest eine flache Längsnut (42) eingeformt ist und die Längsnuten benachbarter Hohlprofile einen Hohlraum (44) rechteckigen Querschnitts begrenzen.

9. Auffahrschiene nach einem der Ansprüche 5 bis 8, **dadurch gekennzeichnet, dass** die Profildecke (34) an ihren mit den Seitenwänden (32, 33) des Hohlprofils (30) gebildeten Kanten jeweils eine Einformung (48ₑ) aufweist, die mit der entsprechenden Einformung des anliegenden Hohlprofils (30) eine hinterschnittene Nut (48) bildet.

10. Auffahrschiene nach Anspruch 9, **dadurch gekennzeichnet, dass** in die äußeren Einformungen (48ₑ) der außenliegenden Hohlprofile (30) jeder Schienenhälfte (14) ein Seitenbegrenzungsstreifen (50) eingesetzt ist.

11. Auffahrschiene nach einem der Ansprüche 1 bis 10, **gekennzeichnet durch** zueinander in Abstand (t) parallele Querprofile (52) an der Oberfläche der Schienenhälften (14).

12. Auffahrschiene nach Anspruch 11, **dadurch gekennzeichnet, dass** der Abstand (t) der Querprofile (52) veränderlich gestaltet ist.

## Claims

1. Ramp serving as a loading bridge between a road (16) and a loading platform, ramp or similar area (18) arranged at a distance therefrom with a track-like surface which may be suitable for vehicle tyres, the body of the ramp being composed of a plurality of extruded hollow sections (30) extending in the longitudinal direction thereof, **characterised in that** the body of the ramp (10) is divided into two in the longitudinal direction and is assembled from two ramp halves (14) each consisting of at least two hollow sections and the two ramp halves are releasably connected together by means of at least one coupling device (54), the coupling devices (54) each having a locking bolt (56) for at least one hollow section (30) of one of the ramp halves (14) and the locking bolts engaging in the interior (31) of the hollow section and being connected by means of a yoke-like transverse element extending outside the hollow sections.

2. Ramp according to claim 1, **characterised in that** the yoke-like transverse element is a base plate (58).

3. Ramp according to claim 1 or claim 2, **characterised by** two locking bolts (56) extending approximately along the centre lines (M) of adjacent hollow sections (30) of the two ramp halves (14).

4. Ramp according to claim 2 or claim 3, **characterised in that** the locking bolts (56) each pass through the bottom (35) of their respective hollow sections (30), against which the base plate (58) of the coupling device (54) substantially bears.

5. Ramp according to one of claims 1 to 4, **characterised in that** the locking bolt (56) is supported by means of its end (57) against the top (34) of the hollow section (30).

6. Ramp according to one of claims 1 to 5, **characterised in that** a gap (f) exists between the two ramp halves (14) of hollow sections (30) and is preferably approximately 10 % of the width (e₁) of two hollow sections of the ramp half.

7. Ramp according to one of claims 1 to 6, **characterised in that** the ramp comprises an end supporting tongue (20) and the supporting tongue (20) overlaps the aligned end faces (12) of the two ramp halves (14) transversely to the longitudinal axis (A) of the ramp (10).

8. Ramp according to one of claims 1 to 7, **characterised in that** the hollow sections (30) of the ramp have a box-like cross section, at least one flat longitudinal groove (42) is moulded into the side walls (32, 33) of the hollow section (30) and the longitudinal grooves of adjacent hollow sections delimit a hollow chamber (44) with a rectangular cross section.

9. Ramp according to one of claims 5 to 8, **characterised in that** the top (34) of the section is provided on its edges formed together with the side walls (32, 33) of the hollow section (30) with respective recesses (48ₑ) each forming an undercut groove (48) together with the corresponding recess in the adjacent hollow section (30).

10. Ramp according to claim 9, **characterised in that** an end strip (50) is inserted into the outer recesses (48ₑ) in the external hollow sections (30) of each ramp half (14).

11. Ramp according to one of claims 1 to 10, **characterised by** parallel transverse sections (52) at a distance (t) from one another on the surface of the ramp halves (14).

12. Ramp according to claim 11, **characterised in that** the distance (t) between the transverse sections (52) is variable.

## Revendications

1. Rail de montée en tant que passerelle de chargement entre un sol (16), sur lequel s'effectue le déplacement, et une plateforme de chargement, une rampe ou une surface analogue (18), située à distance du sol, possédant une surface en forme de voie de déplacement, sur laquelle peuvent éventuellement circuler des pneumatiques de véhicules, le corps du rail de montée étant constitué de plusieurs profilés creux (30) qui s'étendent dans la direction longitudinale de la rampe et sont fabriqués par extrusion,
**caractérisé en ce que**
le corps du rail de montée (10) est divisé en deux dans la direction longitudinale et est formé par la réunion de deux moitiés de rail (14) comprenant chacune au moins deux profilés creux et que les deux moitiés du rail sont reliées entre elles de façon amovible par au moins un dispositif d'accouplement (54), le dispositif d'accouplement (54) comportant respectivement un boulon de retenue (56) pour au moins un profilé creux (30) d'une moitié (4) du rail, et les boulons de retenue s'engageant dans l'espace intérieur (31) du profilé creux et étant reliés par l'intermédiaire d'un élément transversal en forme de travée, qui s'étend à l'extérieur des profilés creux.

2. Rail de montée selon la revendication 1, **caractérisé en ce que** l'élément transversal en forme de travée est une plaque formant socle (58).

3. Rail de montée selon la revendication 1 ou 2, **caractérisé par** deux boulons de retenue (56), qui s'étendent approximativement sur les lignes médianes (M) de profilés creux (30), qui sont directement voisins, des deux moitiés (14) du rail.

4. Rail de montée selon la revendication 2 ou 3, **caractérisé en ce que** les boulons de retenue (56) traversent les fonds (35) de leur profilé creux (30), sur lequel s'applique par exemple la plaque formant socle (58) du dispositif d'accouplement (54).

5. Rail de montée selon l'une des revendications 1 à 4, **caractérisé en ce que** le boulon de retenue (56) s'applique par sa tête (57), avec une action de soutien, contre le couvercle (34), situé côté supérieur, du profilé creux (30).

6. Rail de montée selon l'une des revendications 1 à 5, **caractérisé en ce qu'**entre les deux moitiés (14) du rail de profilés creux (30) il existe une distance (f) qui définit une fente et qui est égale de préférence à environ 10 % de la largeur (e₁) de deux profilés creux de la moitié du rail.

7. Rail de montée selon l'une des revendications 1 à 6, **caractérisé en ce que** le rail de montée contient une languette d'appui (20), située du côté de l'extrémité, et que la languette d'appui (20) s'engage par-dessus des faces frontales alignées (12) des deux moitiés (14) du rail, transversalement par rapport à l'axe longitudinal (A) du rail de montée (10).

8. Rail de montée selon l'une des revendications 1 à 7, **caractérisé en ce que** les profilés creux (30) du rail de montée possèdent une section transversale en forme de boîte et que respectivement au moins une rainure longitudinale plane (42) est formée dans les parois latérales (32,33) du profilé creux (30) et que les rainures longitudinales de profilés creux voisins délimitent une cavité (44) ayant une section transversale rectangulaire.

9. Rail de montée selon l'une des revendications 5 à 8, **caractérisé en ce que** le couvercle (34) du profilé comporte, sur ses bords formés par les parois latérales (32,33) du profilé creux (30), respectivement une partie conformée (48ₑ), qui forme, avec la conformation correspondante du profilé creux appliqué (30), une rainure en contre-dépouille (48).

10. Rail de montée selon la revendication 9, **caractérisé en ce qu'**une bande (50) de limitation latérale est insérée dans les conformations extérieures (48ₑ) des profilés creux extérieurs (30) de chaque moitié (14) du rail.

11. Rail de montée selon l'une des revendications 1 à 10, **caractérisé en ce qu'**elle comporte des profilés creux (52) qui sont parallèles entre eux à une distance (t) et sont situés sur la face supérieure des moitiés (14) du rail.

12. Rail de montée selon la revendication 11, **caractérisé en ce que** la distance (t) des profils transversaux (52) est variable.
